(19) Europäisches Patentamt
European Patent Office
Office européen des brevets

(11) Veröffentlichungsnummer: **0 006 603**
**B1**

# (12) EUROPÄISCHE PATENTSCHRIFT

(45) Veröffentlichungstag der Patentschrift: **24.03.82**

(51) Int. Cl.³: **C 08 G 63/68,** C 08 G 63/46

(21) Anmeldenummer: **79102103.3**

(22) Anmeldetag: **25.06.79**

(54) **Verfahren zur Herstellung lichtstabilisierter phosphorhaltiger Polyester.**

(30) Priorität: **29.06.78 DE 2828463**

(43) Veröffentlichungstag der Anmeldung: **09.01.80 Patentblatt 80/1**

(45) Bekanntmachung des Hinweises auf die Patenterteilung: **24.03.82 Patentblatt 82/12**

(84) Benannte Vertragsstaaten: **AT BE CH DE FR GB IT LU NL SE**

(56) Entgegenhaltungen:

**DD-A-102 714**
**DE-A1-2 412 216**
**DE-B-1 152 259**
**US-A-3 097 184**

(73) Patentinhaber: **HOECHST AKTIENGESELLSCHAFT, Postfach 80 03 20, D-6230 Frankfurt/Main 80 (DE)**

(72) Erfinder: **Blöcker, Erich, Dr., Cheruskerstrasse 7, D-6238 Hofheim am Taunus (DE)**
Erfinder: **Jakob, Franz, Dr., Schlossstrasse 34, D-6238 Hofheim am Taunus (DE)**

**EP 0 006 603 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zur Herstellung lichtstabilisierter phosphorhaltiger Polyester

Die Erfindung bezieht sich auf ein Verfahren zur Herstellung mattierter, linearer Polyester durch Umsetzung von

a) Terephthalsäure oder deren Dimethylester,
b) einem Glykol,
c) einer ein phosphorhaltiges Kettenglied liefernden Verbindung, wobei dieses Kettenglied bis zu 15 Gew.-%, bezogen auf den fertigen Polyester ausmacht, und sie aus der Gruppe der Phosphonsäure und deren Ester, der Phosphinsäure und deren Ester, Ethylen-bis-methylphosphinsäure oder 2-Carboxyethylmethylphosphinsäure, wenn das Phosphoratom in die Polymerkette eingebaut werden soll, oder der Phosphinoxide, wenn das Phosphoratom seitlich gebunden ist, gewählt wird, und
d) Sauerstoffverbindungen des Phosphors.

Die seit langem bekannten und industriell hergestellten Polyester haben im allgemeinen eine für die praktischen Verwendungszwecke gute oder sehr gute Lichtbeständigkeit. Die für den textilen Bereich verwendeten synthetischen linearen Polyester auf Basis von Terephthalsäure und Glykolen, z.B. das Polyethylenterephthalat und das Polybutylenterephthalat, besitzen in der Form von Fasern, Fäden und Folien ebenfalls eine recht gute Lichtbeständigkeit. Diese Polyester der Terephthalsäure, wie z.B. das Polyethylenterephthalat, können durch einen Einbau von anderen Dicarbonsäuren oder Diolen chemisch modifiziert werden, um für bestimmte Einsatzzwecke gezielte Eigenschaftsänderungen von z.B. Fasern, Fäden oder Folien zu erhalten. Ausser Dicarbonsäuren können auch andere Säurekomponenten mit mindestens zwei Säurefunktionen, die zur Esterbildung befähigt sind, in das Polyestermolekül chemisch eingebaut werden, z.B. Phosphonsäuren und Phosphinsäuren. Werden Gruppen mit Phosphor-Atomen in das Polyestermolekül eingebaut, so kann man ab einer bestimmten Zusatzmenge beispielsweise Polyester-Fäden und -Fasern erhalten, die ausser einer verbesserten Anfärbbarkeit auch schwer entflammbar bzw. selbstverlöschend sind.

Zusätzlich zu den phosphorhaltigen Cokomponenten können andere Polyester-Modifizierungskomponenten verwendet werden, beispielsweise solche mit Sulfonatgruppen oder stickstoffhaltige Verbindungen zur Herstellung von basisch oder sauer anfärbbaren Polyestern [s. H. Büttner, Angew. Makromol. Chem. 40/41, 57 (1974)]. Pillarme, leicht färbbare Polyester-Fasern und -Fäden können des weiteren durch Verwendung von geringen Mengen an Permanentvernetzern oder Temporärvernetzern hergestellt werden.

Nun zeigen häufig modifizierte Polyester gegenüber den nicht modifizierten Polymeren eine etwas verringerte Lichtbeständigkeit. Dies macht sich z.B. in einer stärkeren Veränderung der textilen Eigenschaften von aus den Polyestern erzeugten Fasern und Fäden bemerkbar, d.h. die Reissfestigkeiten und die Reissdehnungen nehmen in Abhängigkeit von der Belichtungszeit stärker ab. Die Ursache kann in den andersartigen einkondensierten Struktureinheiten der Modifizierungskomponente liegen, wenn diese gegenüber photochemischen oder photooxidativen bzw. auch hydrolytischen Einflüssen empfindlicher sind.

Als Mattierungsmittel werden Polyestern im allgemeinen Titandioxid-Pigmente zugesetzt, wenn keine glänzenden Fasern und Fäden gewünscht werden. Es können als Pigmente sowohl Anatas- als auch Rutil-Typen eingesetzt werden, wobei für Fasern und Fäden im allgemeinen Anatas-Typen bevorzugt werden, da die härteren Rutil-Pigmente zu einem erhöhten Abrieb an Fadenleitorganen und Walzen bei der Verspinnung und Verstreckung führen. Es ist bekannt, dass Titandioxid-Pigmente den Lichtabbau von vielen Polymeren sowie von Farbstoffen durch katalysierte Photooxidation fördern. Bei dem nichtmodifizierten handelsüblichen Polyethylenterephthalat, das über Dimethylterephthalat hergestellt worden ist, ist der photochemische Einfluss der Titandioxidpigmente gering, d.h. es bestehen praktisch keine Unterschiede in der Lichtbeständigkeit von mattierten Fasern und Fäden mit den in der Praxis üblichen bis zu 2 Gew.-% $TiO_2$-Gehalten gegenüber unmattierten Fasern und Fäden.

Bei chemisch modifiziertem Polyethylenterephthalat tritt häufig bei Verwendung von $TiO_2$-Mattierungsmitteln ein verstärkter Lichtabbau ein, d.h., dass die mattierten Fasern und Fäden eine geringere Lichtbeständigkeit aufweisen als die entsprechenden unmattierten Fasern und Fäden. Die Lichtbeständigkeit ist deshalb auch abhängig von der Menge des zugesetzten $TiO_2$-Pigmentes, d.h. je höher der Mattierungsgrad ist, desto stärker ist der Lichtabbau des modifizierten Polyesters. Eine besonders starke Abhängigkeit der Lichtbeständigkeit vom $TiO_2$-Gehalt der Fasern und Fäden tritt auf, wenn Heteroatome in die Polyesterkette eingebaut sind, die gegenüber photooxidativen Einflüssen empfindlich sind. Dies ist beispielsweise der Fall bei Polyestern, die phosphorhaltige Kettenglieder enthalten. Fäden und Fasern aus linearen Polyestern, die phosphorhaltige Kettenglieder enthalten, sind bekannt. Insbesondere sind organische Derivate von verschiedenen Säuren des Phosphors geeignet, z.B. Phosphonsäure und deren Ester (DE-AS 1 243 819, DE-OS 1 595 598) und Phosphinsäuren und deren Ester (DE-AS 1 232 348, DE-PS 2 236 037). Phosphinsäuren können mit in der Kette in Esterbindung gebundenen Phosphor-Atom in der Form von Diphosphinsäuren entsprechend der DE-PS 2 236 037 oder in der Form von Carboxyphosphinsäuren entsprechend der DE-OS 2 346 787

in die Polyester-Kette statistisch eingebaut werden. Das Phosphor-Atom kann aber auch an einem Polyester-Kettenglied seitlich gebunden sein, z.B. in der Form einer Phosphinoxid-Gruppe entsprechend der DE-OS 2 242 002.

Der Erfindung liegt die Aufgabe zugrunde, Lichtstabilisatoren für Polyester mit phosphorhaltigen Kettengliedern zu finden, die insbesondere die photochemische Aktivität von $TiO_2$-Pigmenten blockieren und ausserdem eine nur sehr geringe Flüchtigkeit während des unter Vakuum stattfindenden Polykondensationsprozesses aufweisen. Ausserdem sollen sie leicht zu handhaben und zu dosieren sein, keine Ablagerungen in den Reaktor bilden, zu thermisch stabilen und farblich einwandfreien Endprodukten führen, die Rückgewinnung des Glykols nicht erschweren und keine den Prozessablauf störende Substanzen in das Reaktionsgemisch einschleppen.

Es wurde nun gefunden, dass ein Zusatz von schwer flüchtigen Estern der Phosphorsäure eine Lichtstabilisierung der gegen die Einwirkung von Licht empfindlichen, mit Titandioxid mattierten Copolyester bewirken kann. Als allgemeine Polyesterstabilisatoren zur Blockierung des Umesterungskatalysators zum Zwecke der Thermostabilisierung sind in vielen Patentschriften neutrale und saure Ester beschrieben, z.B. in der DE-AS 1 152 259 und der DE-OS 2 154 503. Die sauren Phosphorsäureester, das sind nur teilweise veresterte Phosphorsäuren, sind zwar nicht flüchtig, haben aber erhebliche Nachteile als Polyester-Zusatzmittel, da sie als Säuren die Bildung von Diethylenglykol aus dem Ethylenglykol fördern. Dieses ist als Nebenprodukt unerwünscht, da es als Diol ebenfalls in das Polyestermolekül eingebaut wird und die Polyester-Eigenschaften, z.B. den Schmelzpunkt, negativ beeinflusst. Ausserdem verursachen Phosphorsäure und deren saure Ester insbesondere bei kontinuierlichen Produktionsprozessen unerwünschte Ablagerungen in den Reaktoren durch die schnelle Bildung von schwerlöslichen Phosphaten und führen bei einer überschüssigen Anwendung zur Agglomeration des $TiO_2$-Pigmentes, wenn dieses als Mattierungsmittel eingesetzt wird.

Die neutralen Alkylester der Phosphorsäure reagieren zwar auch mit den zweiwertigen Metallionen der Umesterungskatalysatoren genauso wie die Phosphorsäure selbst zu schwer löslichen Metallphosphaten, allerdings ist die Reaktionsgeschwindigkeit der Umsetzung mit den Phosphorsäureestern erheblich, d.h. um Grössenordnungen geringer, da dies keine schnelle Ionenreaktion mehr ist. Deshalb sind unter den angewandten Betriebsbedingungen die neutralen Ester der genannten Gattung bereits merklich flüchtig, wie auch in der DE-OS 2 412 216 ausgeführt. Bei einer Lichtstabilisierung von Copolyestern ist das Problem der Flüchtigkeit der zugesetzten Stabilisatorverbindung noch erheblich verstärkt, da eine wesentlich höhere Menge eines Phosphorsäureesters zugesetzt werden muss, als zur alleinigen Thermostabilisierung des Polyesters notwendig wäre.

Es wurde nun gefunden, dass alle gewünschten Vorteile für eine Lichtstabilisierung von chemisch modifizierten Polyestern erhalten werden, wenn nach der Umesterungs- oder Veresterungsstufe oder während der Polykondensationsreaktion zur Lichtstabilisierung als Sauerstoffverbindungen des Phosphors Phosphorsäuretriester zugesetzt werden, die 1 oder 2 Alkylgruppen mit 1 - 4 C-Atomen sowie gleichzeitig 2 oder 1 Alkylenglykol- oder Polyalkylenglykol-Gruppen enthalten, wobei die Alkylengruppen ihrerseits 2 bis 4 C-Atome enthalten, und wenn die Polyester mit $TiO_2$ mattiert werden.

Alkylenglykole und Polyalkylenglykoläther mit 2 bis 4 C-Atomen pro Alkylengruppen sind z.B. Ethylenglykol, 1,2-Propandiol, 1,3-Propandiol, 1,2-Butandiol, 1,4-Butandiol sowie deren di-, oligo- und polymere Äther. Die bevorzugte Ausführungsform verwendet Mischungen von Phosphorsäuretriestern, die ausser 1 oder 2 niederen Alkylgruppen Mono- bis Polyethylenglykolgruppen als Ester-Gruppen enthalten. Die erfindungsgemäss eingesetzten gemischten Phosphorsäureester werden bevorzugt hergestellt durch Umsetzung eines sauren Mono- oder Dialkylphosphats oder einer Mischung derselben mit einem Alkylenoxid mit 2 bis 4 C-Atomen nach bekannten Verfahren ohne Verwendung eines Lösungsmittels oder Katalysators. Das Alkylenoxid addiert sich an die freien Hydroxylgruppen der sauren Alkylphosphate unter Bildung von 2-Hydroxyalkyl-Estergruppen. Die Alkylenoxid-Addition bleibt aber nicht bei dieser Monoaddition stehen, sondern solange die Reaktionsmischung durch noch freie Säuregruppen sauer reagiert, addiert sich das Alkylenoxid auch an die endständigen Hydroxylgruppen der schon addierten Alkylenoxid-Einheiten (siehe Houben-Weyl, Methoden der Organischen Chemie, Stuttgart 1964, Bd. XII/2, S. 307). Dadurch entstehen Polyalkylenglykoläther als Ester-Gruppen von verschiedener Kettenlänge. Wenn gegen Ende der Reaktion die Konzentration der Säuregruppen stark abnimmt, bilden sich nur noch Monoadditionsprodukte, die analytisch durch Verseifung und gaschromatographische Bestimmung in Mengen von einigen Gew.-% nachweisbar sind. Die Alkylenoxidaddition wird so lange fortgesetzt, bis das entstehende Phosphorsäureester-Gemisch eine Säurezahl kleiner als 1 aufweist, d.h. praktisch kaum noch Alkylenoxid aufnimmt. Die Säurezahl (SZ) ist definiert als die Menge Kaliumhydroxid in mg, die zur Neutralisation von 1 g Substanz erforderlich ist (siehe Römpp, Chemie Lexikon, 6. Aufl., Stuttgart 1966, Bd. II, Sp. 2037/8). Eine genaue Beschreibung dieser Ausführungsform der Herstellung der erfindungsgemäss verwendeten Phosphorsäuretriester ist in der US-PS 2 990 421 veröffentlicht.

Die durch das bevorzugte Herstellverfahren der erfindungsgemäss eingesetzten gemischten

Phosphorsäuretriester erhaltenen Oligo- und Polyalkylenglykoläthergruppen bewirken den Vorteil, dass der zugesetzte Stabilisator während des Polyester-Polykondensationsprozesses nur eine sehr geringe Flüchtigkeit aufweist und somit der (analytisch bestimmbare) Phosphor-Gehalt im Polyester nur geringfügig unter dem aufgrund der Einsatzmenge berechneten liegt.

Die beim erfindungsgemässen Verfahren als Lichtstabilisatoren verwendeten gemischten Phosphorsäureester können auch auf anderen Wegen als dem beschriebenen, der eine bevorzugte Ausführungsform darstellt, hergestellt werden. Zum Beispiel können die Mono- oder Dialkylphosphorsäurechloride mit Glykolen bzw. Mischungen von Glykolen durch Erhitzen bei atmosphärischem Druck und bei vermindertem Druck zu Phosphorsäuretriestern umgesetzt werden, wie in der US-PS 3 097 184 (Beispiel 2) beschrieben. Eine Aussage über den Umsetzungsgrad bzw. die abgespaltene Menge Chlorwasserstoff ist nicht gemacht. Durch Zusatz eines säurebindenden Mittels sind bessere Umsetzungen zu erreichen (siehe dazu: Houben-Weyl, Bd. XII/2, S. 315 - 317). Anschliessend muss aber das entstandene anorganische oder organische Salz quantitativ abgetrennt werden, da sonst Störungen bei der Polyesterherstellung auftreten und die Polyester-Eigenschaften negativ beeinflusst werden. Auf ähnliche Weise können durch Reaktion von Phosphoroxychlorid, $POCl_3$, mit Glykolen, Polyglykolen oder Mischungen derselben und gleichzeitiger Abwesenheit von Alkanolen — oder auch in einer nachfolgenden Reaktionsstufe — bei gleichzeitiger Anwesenheit einer Base als Chlorwasserstoffakzeptor die oben beschriebenen erfindungsgemässen gemischten Phosphorsäuretriester hergestellt werden (vgl. JA-PS 6 430 154; C.A. 62, 11737a). Eine weitere Möglichkeit ihrer Herstellung besteht in einer Umesterungsreaktion eines niederen Trialkylphosphats mit Glykolen. Diese Reaktion erfolgt auch bei höheren Temperaturen ohne einen Katalysator nur partiell und sehr langsam unter gleichzeitiger partieller Hydrolyse. Für eine brauchbare Umesterungsreaktion mit höheren Alkoholen bzw. Glykolen und Polyglykolen sind deshalb basische Katalysatoren erforderlich (siehe Houben-Weyl, Methoden der Organischen Chemie, Stuttgart 1964, Bd. XII/2, S. 371). Zur Verwendung so hergestellter gemischter Phosphorsäuretriester als Polyester-Stabilisatoren müssen die basischen Zusatzmittel vorher aus der Reaktionsmischung entfernt bzw. abgetrennt werden.

In der schon oben erwähnten DE-AS 1 152 259 ist als Polyester-Stabilisator zur Stabilisierung nach der Umesterung von Dimethylterephthalat das «Tris-(2-hydroxyethyl)-phosphat» aufgeführt. Diese Verbindung hat bei einer Verwendung zur Lichtstabilisierung von modifizierten Polyestern aber wesentliche Nachteile. Da sie drei endständige, primäre Hydroxylgruppen besitzt, kann sie bei dem Polykondensationsprozess als trifunktionelle Verbindung reagieren und als Verzweigungs- bzw. Vernetzungspunkt in den Polyester eingebaut werden [vgl. M. C. St. Cyr, SPE Transactioons 1, Nr. 1,47-51 (1961)]. Dies führt bekanntermassen je nach Menge an zugesetzter trifunktioneller Verbindung zu modifizierten Polyestern mit deutlich veränderten Eigenschaften, z.B. einer höheren Schmelzviskosität, geringerer Festigkeit und höherer Quersprödigkeit der Fäden, alles Eigenschaften, die nur in Spezialfällen als Polyester-Eigenschaften gewünscht werden. Die beim erfindungsgemässen Verfahren eingesetzten Stabilisatoren sind aber in bezug auf die Hydroxylgruppen mono- oder bifunktionell, können also in die lineare Polyesterkette eingebaut werden oder sich als Endgruppe am Polyestermolekül befinden. Infolge der geringeren Stabilisatorkonzentration tritt auch praktisch keine Störung der Polykondensationsreaktion durch Kettenabbruch ein.

Bei einer Herstellung von «Tris-(2-hydroxyethyl)-phosphat» durch Ethylenoxid-Addition an Phosphorsäure kann aus den oben erläuterten Gründen keine reine, definierte Verbindung erhalten werden, da Polyethylenglykoläther-Einheiten unterschiedlicher Kettenlänge als Estergruppen entstehen. Dadurch hat dieser Stabilisator gegenüber den Mischestern den zusätzlichen Nachteil eines erheblich geringeren Phosphorgehaltes im Molekül, so dass entsprechend eine grössere Menge Stabilisator dem Polyester zugesetzt werden müsste, wenn zur Erzielung des gewünschten Stabilisierungseffektes eine bestimmte Phosphor-Konzentration im Polyester erforderlich ist. Dadurch können dann die oben erwähnten Nachteile der trifunktionellen Verbindung verstärkt auftreten.

Die zur Herstellung der Phosphorsäuretriester verwendeten sauren Alkylphosphate sind bevorzugt Methylphosphate, d.h. Monomethylphosphat, Dimethylphosphat oder auch Mischungen aus beiden. Es können aber auch Ethyl-, Propyl- oder Butylphosphate verwendet werden. Diese sauren Alkylphosphate können beispielsweise gewonnen werden durch Umsetzung einer Polyphosphorsäure mit bestimmtem $P_2O_5$-Gehalt mit einer bestimmten berechneten Menge eines Alkanols mit 1 bis 4 C-Atomen, bevorzugt mit Methanol. Durch Oxidation von Dialkylphosphiten zu Dialkylphosphaten können ebenfalls Ausgangsverbindungen für die gemischten Phosphorsäuretriester erhalten werden.

Die zur Addition an die sauren Alkylphosphate verwendeten Alkylenoxide können Ethylenoxid, Propylenoxid oder Butylenoxid sein. Bevorzugt wird Ethylenoxid verwendet.

Die Menge des zur Lichtstabilisierung der phosphorhaltigen Copolyester zugesetzten erfindungsgemässen Stabilisators hängt zum einen von der Art und Menge der eingesetzten Modifizierungskomponente und zum anderen vom Mattierungsgrad des Polyesters ab, d.h. wieviel $TiO_2$-Pigment im Polyester inkorporiert ist sowie von der Kristallform des Titandioxids und dessen Herstellungsweise. Bei chemischen Modifizierungen von Terephthalsäure-Polyestern können bis zu etwa 15 Gew.-% einer Cokomponente, bezogen auf den fertigen Polyester, in der Praxis verwendet werden, um noch genügend hochschmelzende Polyester zu erhalten.

$TiO_2$-Mattierungsmittel werden bei Polyester-Fasern und -Fäden in Mengen von etwa 0,04 bis etwa 2,0 Gew.-% eingesetzt. Beides erfordert naturgemäss eine ähnliche Variation in der zugesetzten Stabilisatormenge. Für die Stabilisierungswirkung ist hauptsächlich die zugesetzte Menge an fünfwertigem Phosphor massgebend. Deshalb ist auch der Phosphorgehalt der Stabilisator-Verbindung zu berücksichtigen. Je höher der Gehalt an Alkylgruppen, insbesondere an Methylgruppen, desto höher ist der Phosphor-Gehalt der Mischester und um so weniger Stabilisator wird im Polyester benötigt. Die verwendeten Stabilisatormengen werden deshalb auf den Phosphor-Gehalt bezogen, der dem Polyester hierdurch zugesetzt wird. Dieser kann im Bereich von 10 ppm bis 800 ppm Phosphor, vorzugsweise 20-800 ppm Phosphor, insbesondere aber bei den meisten praktischen Anwendungszwecken zwischen 30 und 300 ppm Phosphor liegen. Dabei sind die Phosphor-Gehalte, die von den phosphorhaltigen Kettengliedern im Polyester herrühren, nicht mit einbezogen.

Neben der Terephthalsäure und den oben erwähnten phosphorhaltigen Verbindungen als Polyester-Modifizierungsmittel können als Glykole Polymethylenglykole mit 2 bis 10 C-Atomen verwendet werden, aber auch cyclische Glykole wie 1,4 Cyclohexandimethanol und ähnliche Verbindungen. Bevorzugt wird Ethylenglykol und Butylenglykol (= 1,4-Butandiol) verwendet.

Die Vorteile der Erfindung gehen aus den folgenden Tabellen 1 und 2 hervor. Hierin sind die Lichtbeständigkeit von Polyethylenterephthalat-Filamentgarnen verglichen, und zwar unmodifiziertes Polyethylenterephthalat (PET) und mit verschiedenen phosphorhaltigen Cokomponenten modifiziertes Polyethylenterephthalat ohne und mit Lichtstabilisatoren.

Tabelle 1

Belichtungsprüfung in einem Xenotest-Gerät

| Polyester-Filamentgarne vom Titer dtex 56 f 24 | Modifizierungskomponente Substanz | Gew.-%[2] | $TiO_2$[3] Geh. Gew.-% | Ausgangswerte Reiss-fest. cN/tex | Reiss-dehn. % | 1500 Wlst.[4] RRF[5] % | RRD[5] % |
|---|---|---|---|---|---|---|---|
| 1. PET[6] | — | — | — | 52,9 | 21,6 | 79,8 | 74,5 |
| 2. PET | — | — | 0,38 | 53,4 | 19,4 | 76,2 | 76,8 |
| 3. PET-Modif.[6] | 2-Carboxyethyl-methylphosphin-säure[9] | 5 | — | 35,9 | 34,1 | 78,0 | 60,2 |
| 4. PET-Modif. | » | 5 | 0,36 | 41,0 | 31,2 | 36,8 | 45,5 |
| 5. PET-Modif., +0,15 Gew.-% Phosphorsäure-Ester[7] mit 11,1 Gew.-% P | » | 5 | 0,36 | 39,3 | 29,8 | 74,6 | 67,3 |
| 6. PET-Modif. | 2-Carboxyethyl-methylphosphin-säure[9] | 3 | 0,04 | 41,5 | 26,8 | 72,8 | 60,1 |
| 7. PET-Modif., +0,08 Gew.-% Phosphorsäure-Ester[8] mit 7,2 Gew.-% P | » | 3 | 0,04 | 37,5 | 29,5 | 75,7 | 68,2 |

Tabelle 2

Belichtungsprüfung in einem Xenotest-Gerät

| Polyester-Filamentgarne vom Titer dtex 56 f 24 | | Modifizierungskomponente Substanz | Gew.-%[2] | $TiO_2$[3] Geh. Gew.-% | Ausgangswerte Reiss-fest. cN/tex | Reiss-dehn. % | 1500 Wlst.[4] RRF[5] % | RRD[5] % |
|---|---|---|---|---|---|---|---|---|
| 8. | PET-Modif.[6] | 2-Carboxyethyl-methylphosphin-säure[9] | 3 | 0,38 | 42,3 | 33,0 | 44,3 | 44,5 |
| 9. | PET-Modif., +0,14 Gew.-% Phos-phorsäure-Ester[8] mit 7,7 Gew.-% P | » | 3 | 0,38 | 34,8 | 32,7 | 78,7 | 72,4 |
| 10. | PET-Modif. | » | 3 | 1,3 | 35,4 | 34,6 | 21,5 | 11,0 |
| 11. | PET-Modif., +0,28 Gew.-% Phos-phorsäure-Ester[8] mit 7,7 Gew.-% P | » | 3 | 1,3 | 41,2 | 21,9 | 63,9 | 60,3 |
| 12. | PET-Modif. | Ethylen-bis--methylphosphin-säure[10] | 3 | — | 33,9 | 31,7 | 71,3 | 54,6 |
| 13. | PET-Modif. | » | 3 | 0,38 | 31,0 | 26,8 | 32,4 | 8,5 |
| 14. | PET-Modif., +0,25 Gew.-% Phos-phorsäure-Ester[7] mit 11,1 Gew.-% P | » | 3 | 0,38 | 35,6 | 22,4 | 68,7 | 59,2 |

Erläuterungen zu der Tabelle im einzelnen.
Es bedeuten:

(1) Die Belichtungsprüfung erfolgte in einem Xenotest-Gerät der Firma Quarzlampen GmbH, Hanau, Typ Xenotest 450, bei 65% relativer Luftfeuchtigkeit und einer Probenraumtemperatur von 30 bis 35°C. Die Temperatur der Proben selbst, d.h. die Schwarztafeltemperatur («black panel temperature»), betrug etwa 40°C.

(2) Gew.-% der Modifizierungskomponente ist bezogen auf den Gehalt im fertigen Polyester.

(3) Das in den Polyestern während des Herstellungsprozesses eingearbeitete $TiO_2$-Pigment vom Anatas-Typ ist das «Kronos AD» der Kronos-Titan-GmbH, Leverkusen. Die Gew.-% beziehen sich auf den Gehalt im fertigen Polyester.

(4) Wendelaufstunden: Die Belichtung erfolgte im Wendelauf (Tag-Nacht-Rhythmus), so dass die reine Belichtungszeit nur 50% der Probenlaufzeit betrug.

(5) RRF bedeutet die Restreissfestigkeit, RRD die Restreissdehnung, und zwar angegeben in Prozent bezogen auf die Ausgangsreissfestigkeit und die Ausgangsreissdehnung.

(6) Sämtliche Polyethylenterephthalat(PET)-Polyester wurden nach dem Dimethylterephthalat-Umesterungsverfahren mit Ethylenglykol hergestellt, wobei gegebenenfalls die phosphorhaltige Modifizierungskomponente nach der Umesterungsstufe zugegeben wurde. Umesterungs-Katalysator: Mn(II)-acetat; Polykondensations-Katalysator: $Sb_2O_3$; Thermostabilisator zur Blockierung des $Mn^{2+}$: $H_3PO_3$ (nur bei den ohne Zusatz eines Phosphorsäureesters hergestellten Polyestern). Die Phosphorsäureester (7) und (8) wurden nach der Umesterungsstufe zugesetzt.

(7) Als Phosphorsäureester wurde ein Produkt eingesetzt, das aus einer Mischung von Mono- und Dimethylphosphat durch Umsetzung mit Ethylenoxid bis zu einer Säurezahl < 0,5 erhalten wurde und einen Phosphorgehalt von 11,1 Gew.-% besass.

(8) Als Phosphorsäureester wurden Produkte eingesetzt, die aus Monomethylphosphat, $CH_3O\text{-}P(=O)(OH)_2$, durch Umsetzung mit Ethylenoxid bis zu einer Säurezahl < 0,5 erhalten wurden und einen Phosphorgehalt von 7,2 Gew.-% bzw. 7,7 Gew.-% besassen.

(9) 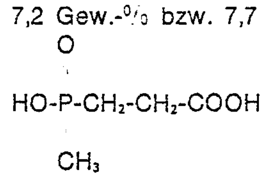 nach DE-OS 2 346 787

(10) 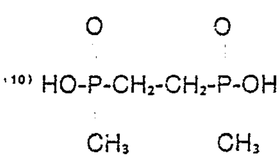 nach DE-PS 2 236 037

**Patentansprüche**

1. Verfahren zur Herstellung mattierter, linearer Polyester durch Umsetzung von
a) Terephthalsäure oder deren Dimethylester,
b) einem Glykol,
c) einer ein phosphorhaltiges Kettenglied liefernden Verbindung, wobei dieses Kettenglied bis zu 15 Gew.-%, bezogen auf den fertigen Polyester ausmacht, und sie aus der Gruppe der Phosphonsäure und deren Ester, der Phosphinsäure und deren Ester, Ethylen-bis-methylphosphinsäure oder 2-Carboxyethylmethylphosphinsäure, wenn das Phosphoratom in die Polymerkette eingebaut werden soll, oder der Phosphinoxide, wenn das Phosphoratom seitlich gebunden ist, gewählt wird, und
d) Sauerstoffverbindungen des Phosphors,

dadurch gekennzeichnet, dass nach der Umesterungs- oder Veresterungsstufe oder während der Polykondensationsreaktion zur Lichtstabilisierung als Sauerstoffverbindungen des Phosphors Phosphorsäuretriester zugesetzt werden, die 1 oder 2 Alkylgruppen mit 1 - 4 C-Atomen sowie gleichzeitig 2 oder 1 Alkylenglykol- oder Polyalkylenglykol-Gruppen enthalten, wobei die Alkylengruppen ihrerseits 2 bis 4 C-Atome enthalten, und dass die Polyester mit $TiO_2$ mattiert werden.

2. Verfahren nach Anspruch 1, dadurch gekennzeichnet, dass die Menge des zugesetzten Phosphorsäuretriesters einem dadurch eingesetzen Phosphor-Gehalt von 10 bis 800 mg/kg, bezogen auf den fertigen Polyester, entspricht.

**Claims**

1. Process for the manufacture of delustered linear polyesters by reaction of
a) terephthalic acid or the dimethyl ester thereof,
b) a glycol,
c) a compound forming a phosphorus-containing chain member, which amounts to up to 15 weight.%, relative to the finished polyester, and which is selected from the group of phosphonic acid and its ester, phosphinic acid and its ester, ethylene-bis-methylphosphinic acid or 2-carboxyethylmethylphosphinic acid, if the phosphorus atom is to be built into the polymer chain, or from the phosphine oxides if the phosphorus atom is to be built into the side chain, and
d) oxygen compounds of phosphorus,

characterized in that after the ester interchange or esterification step or during the polycondensation reaction phosphoric acid triesters as oxygen compounds of phosphorus for stabilization to light are added, which contain 1 or 2 alkyl groups having from 1 to 4 carbon atoms and simultaneously 2 or 1 alkylene glycol or polyalkyleneglycol groups, the alkylene groups of which having from 2 to 4 carbon atoms, and delustering the polyester with $TiO_2$.

2. Process as claimed in claim 1, characterized in that the amount of phosphoric acid triester added corresponds to a phosphorus content so introduced of from 10 to 800 mg/kg, relative to the finished polyester.

**Revendications**

1. Procédé de préparation de polyesters linéaires délustrés par réaction:
a) d'acide téréphthalique ou de téréphtalate de diméthyle avec
b) un glycol,
c) un composé donnant une partie de chaîne phosphorée, cette partie de chaîne pouvant constituer jusqu'à 15% en poids du polyester final, et qui est pris parmi les acides phosphonique et phosphinique et leurs esters, l'acide éthylène-bis-méthylphosphinique ou l'acide 2-carboxyéthyl-méthylphosphinique si l'atome de phosphore doit faire partie de la chaîne du polymère, ou bien des oxydes de phosphines si l'atome de phosphore est lié en chaîne latérale, et
d) des composés oxygénés du phosphore,

procédé caractérisé en ce que, après le stade de transestérification ou d'estérification, ou encore au cours de la réaction de polycondensation, on ajoute pour la photostabilisation, comme composés oxygénés du phosphore, des triesters de l'acide phosphorique ayant à la fois un ou deux groupes alkyles en $C_1$-$C_4$ et deux ou un groupe alkylène-glycol ou polyalkylèneglycol dont les groupes alkylènes ont de 2 à 4 atomes de carbone, et on délustre les polyesters avec $TiO_2$.

2. Procédé selon la revendication 1, caractérisé en ce que la proportion ajoutée du triester phosphorique correspond à une teneur en phosphore incorporé de 10 à 800 mg par kilogramme du polyester final.